# FASCICULE DE BREVET EUROPEEN

(11) **EP 1 266 359 B1**
(45) Date de publication et mention de la délivrance du brevet: **09.02.2005**
(21) Numéro de dépôt: 01913941.9
(22) Date de dépôt: 06.03.2001
(51) Int. Cl.: G07C 9/00

(54) **PROCEDE D'IDENTIFICATION BIOMETRIQUE, DISPOSITIF ELECTRONIQUE PORTATIF ET DISPOSITIF ELECTRONIQUE D'ACQUISITION DE DONNEES BIOMETRIQUES POUR SA MISE EN OEUVRE**
BIOMETRISCHES IDENTIFIKATIONSVERFAHREN, TRAGBARE ELEKTRONISCHE VORRICHTUNG UND ELEKTRONISCHE VORRICHTUNG FÜR BIOMETRISCHE DATENERFASSUNG ZUR VERWENDUNG MIT SELBIGER
BIOMETRIC IDENTIFICATION METHOD, PORTABLE ELECTRONIC DEVICE AND ELECTRONIC DEVICE ACQUIRING BIOMETRIC DATA THEREFOR

(30) Priorité: 10.03.2000 FR 0003282
(43) Date de publication de la demande: 18.12.2002
(73) Titulaire: Gemplus, 13881 Gémenos Cedex (FR)
(72) Inventeur: PRACA, Denis, F-13080 Luynes (FR)
(86) Numéro de dépôt international: PCT/FR2001/000671
(87) Numéro de publication internationale: WO 2001/067399

(56) Documents cités:
- WO-A-00/10134
- WO-A-00/42577
- WO-A-98/01820
- WO-A-99/13434

## Description

L'invention concerne le domaine de la biométrie.

Dans ce domaine technique qui consiste à acquérir, mesurer et reconnaître des caractéristiques physiques d'un utilisateur, on connaît déjà de nombreuses méthodes de reconnaissance concernant des caractéristiques vocales, des caractéristiques propres à la forme du visage ou à l'iris de l'oeil ou, dans le cas le plus fréquent, des caractéristiques d'empreintes digitales.

L'essentiel des travaux de recherche vise à améliorer la qualité de la reconnaissance, c'est à dire réduire autant que possible le nombre de reconnaissances ou de rejets erronés. D'autres travaux visent à optimiser les algorithmes, en réduisant la puissance de calcul nécessaire à leur mise en oeuvre.

Par ailleurs, une méthode couramment utilisée pour l'identification d'un utilisateur consiste à présenter un code d'identification secret également appelé PIN (pour Personal Identification Number en anglais). La multiplication de ces codes rendant leur mémorisation difficile, la biométrie serait une alternative possible, à la condition qu'elle assure un niveau de sécurité équivalent.

L'un des domaines privilégiés d'utilisation des codes secrets concerne les objets électroniques portatifs, en particulier les cartes à puces (cartes à mémoires ou à microprocesseurs). De tels objets sont en général utilisés dans des applications nécessitant un très haut degré de sécurité comme des applications bancaires de débit / crédit ou des applications de contrôle d'accès. En effet, grâce à la structure de ces objets aucune donnée secrète n'est accessible de l'extérieur, ce qui permet d'obtenir une protection très élevée.

Il est logique d'associer la simplicité d'utilisation offerte par les techniques de biométrie à la sécurité conférée par les objets électroniques portatifs de type cartes à puces.

De nombreuses propositions ont donc été faites dans ce sens. On peut citer par exemple le brevet français FR-B-2 674 051 et WO-A-9801820.

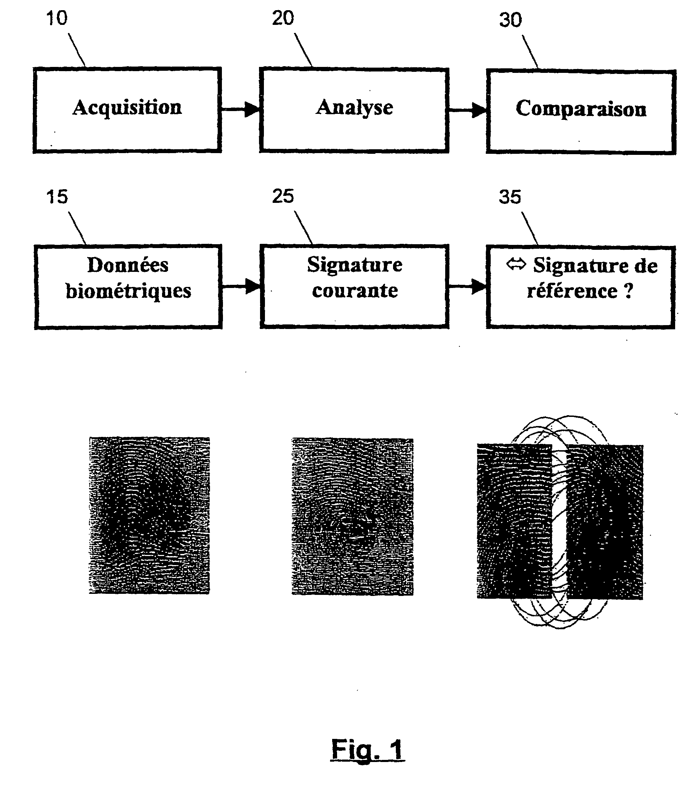

Tous les procédés et systèmes biométriques existant se décomposent en trois phases qui sont représentées sur la Figure 1. La première phase (10) est une phase d'acquisition de données biométriques (15) au cours de laquelle une caractéristique de l'utilisateur va être mesurée. Les données biométriques (15) obtenues lors de cette phase sont le plus souvent des images pour des reconnaissances d'empreintes digitales, d'iris ou de forme du visage, mais il peut également s'agir de séquences sonores dans le cas de reconnaissances vocales.

La deuxième phase (20) est une phase d'analyse permettant d'extraire une signature courante (25), c'est à dire un ensemble de données représentatives, à partir des données biométriques (15), image ou son, obtenues lors de la phase d'acquisition (10). Cette seconde phase (20) est extrêmement complexe et nécessite une grande puissance de calcul. Le taux de reconnaissances ou de rejets erronés, qui est une indication de la qualité et de la fiabilité du procédé ou du système, dépend directement des algorithmes qui vont être mis en oeuvre. L'invention s'appliquant à. tout type d'algorithme, elle ne concerne donc pas l'amélioration de ces algorithme qui fait par ailleurs l'objet de nombreuses recherches.

De même, l'optimisation de ces algorithmes, de façon à réduire la puissance de calcul pour les mettre en oeuvre et leur temps d'exécution, n'est pas non plus l'objet de l'invention, bien qu'elle soit également l'objet de nombreux travaux de recherche.

La troisième phase (30) consiste à comparer la signature courante (25) obtenue lors de la seconde phase (20), à une signature de référence (35) définie auparavant lors de l'enregistrement de l'utilisateur.

Bien que beaucoup moins complexe que la seconde phase (20), en particulier en ce qui concerne la puissance de calcul nécessaire, cette troisième phase (30) est également un domaine d'étude à part entière.

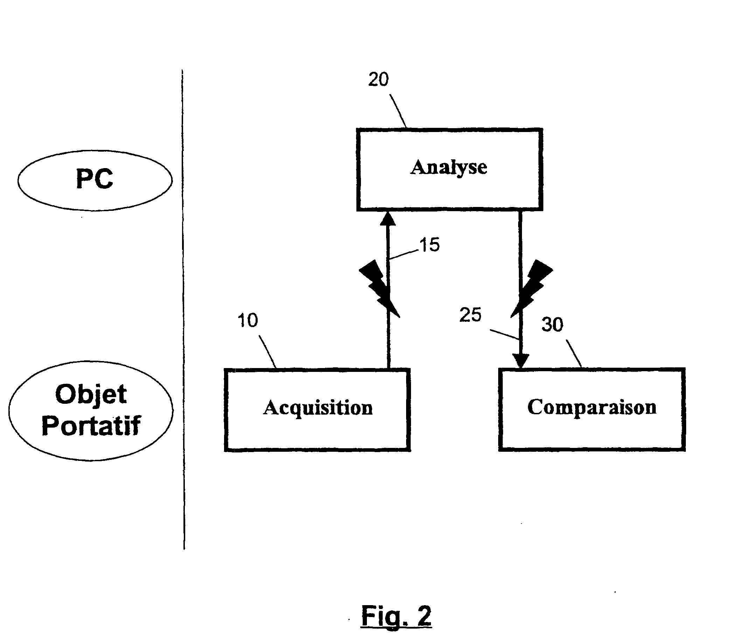

Les objets électroniques portatifs de type cartes à puces sont munis de microprocesseurs dont la puissance de calcul reste encore limitée : comme le représente la Figure 2, il est possible de munir l'objet portatif d'un capteur et d'une mémoire de manière à ce que la phase d'acquisition (10) et la phase de comparaison (30) soient mises en oeuvre par ledit objet ; en revanche, le processeur de l'objet portatif est encore incapable de mettre en oeuvre la phase d'analyse (20) des données biométriques (15) et d'extraction de la signature courante (25).

Pour mettre en oeuvre ladite phase (20), il est nécessaire d'avoir recours au processeur d'un ordinateur. Les problèmes de sécurité apparaissent lors des échanges d'informations (15, 25) entre l'objet portatif et ledit ordinateur. En effet, l'ordinateur n'est pas un système sécurisé, et il est facile pour un pirate d'intercepter les données qui circulent, par exemple à l'aide d'un programme de type « cheval de Troie » . Ainsi un pirate pourrait intercepter les données biométriques (15) lors du premier échange, voire la signature courante (25) issue de la phase d'extraction (20), afin de les utiliser frauduleusement ultérieurement en se faisant passer pour l'utilisateur.

Les systèmes actuels utilisant une identification biométriques ont donc un important problème de sécurité.

C'est ce problème que se propose de résoudre l'invention, laquelle sera mieux comprise à la lecture de la description et des dessins qui vont suivre, donnés à titre non limitatif. Sur les dessins,
- La Figure 1 représente les trois phases d'un procédé d'identification biométrique selon l'art antérieur
- La Figure 2 représente la répartition des taches entre un objet électronique portatif et un ordinateur

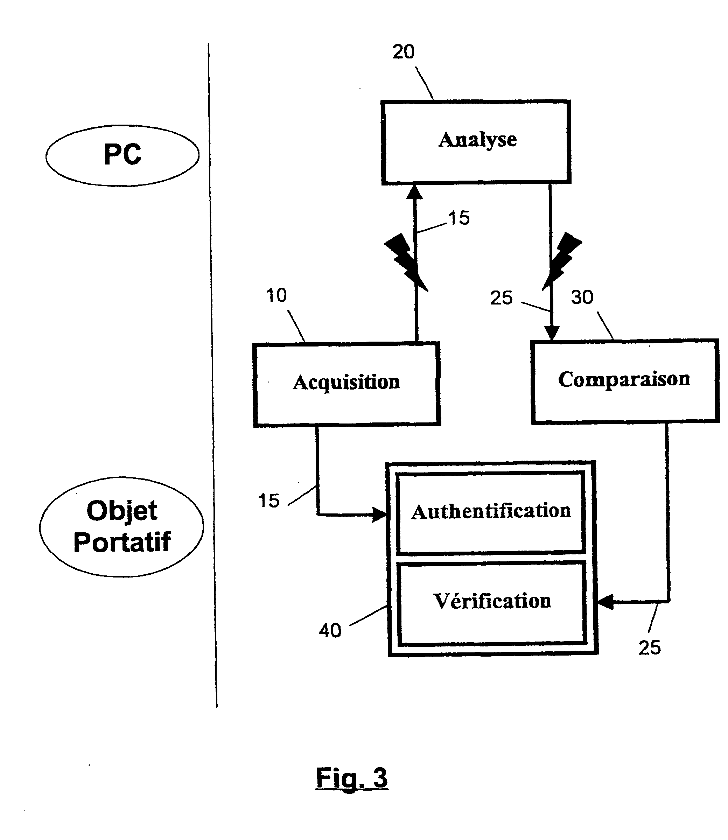

- La Figure 3 représente un procédé d'identification biométrique selon l'invention

Un procédé selon l'invention telle que definie par les caracteristiques de la revendication 1 permet de résoudre les problèmes de sécurité précédemment décrits en ajoutant aux phases d'acquisition (10), d'analyse (20) et de comparaison (30) une phase de vérification (40) de l'origine de la signature courante permettant de s'assurer que la signature courante est bien le résultat de l'analyse des données biométriques obtenues lors de la phase d'acquisition. Cette phase de vérification peut se décomposer en deux étapes :
- Une étape d'authentification qui permet de s'assurer que les données biométriques, image ou son , utilisées lors de la phase d'extraction (20) de la signature courante (25) sont bien les données biométriques (15) qui ont été produites par le capteur lors de la phase d'acquisition (10), et non pas de fausses données fournies par un pirate pour leurrer le système.
- puis il faut vérifier que la signature courante (25) est bien issue de l'analyse des données biométriques (15), et non pas une fausse signature courante fournie par un pirate pour leurrer le système.

De manière avantageuse, l'étape de comparaison (30) d'un procédé selon l'invention est effectuée au sein d'un dispositif électronique portatif dans lequel est mémorisé une signature de référence (35). La phase de vérification (40) peut également être effectuée au sein dudit dispositif électrode portatif.

Un dispositif électronique portatif de type carte à puce selon l'invention telle que definie par les caracteristiques de la revendication 3 comprend des moyens d'acquisition de données biométriques. Dans un premier exemple de mise en oeuvre de l'invention ces moyens d'acquisition comprennent un capteur, de telle sorte que le dispositif portatif est sûr de la provenance des données biométriques (15) générées par le capteur afin de procéder à une identification puisque ces données ne proviennent pas de l'extérieur, mais sont au contraire directement générées au sein du dispositif électronique portatif. Par ailleurs, le dispositif portatif comprend également des moyens de mémorisation stockant au moins une signature de référence (35), ainsi que des moyens de comparaison aptes à comparer une signature courante (25) à la ou les signatures de référence (35) conservées dans les moyens de mémorisation. Ainsi, l'étape de comparaison (30) entre la signature de référence (35) et une signature courante (25) est effectuée au sein de ce dispositif portatif.

Le dispositif électronique comporte également des moyens de vérification qui sont aptes à vérifier que la signature courante (25) provient de l'analyse des données biométriques acquises (15) par les moyens d'acquisition. Selon l'invention, le dispositif doit s'assurer que la signature courante (25) provient bien de l'analyse des données biométriques (15) générées par le capteur. A cette fin, les données biométriques (15) sont conservées dans une mémoire de l'objet portatif. Les données biométriques (15) sont également transférées à un dispositif externe plus puissant, tel qu'un ordinateur, pour procéder à la phase d'analyse (20) permettant d'extraire la signature courante (25). La signature courante (25) est ensuite retournée à l'objet portatif. Mais celui-ci ne se contente pas de comparer la signature courante (25) avec la signature de référence (35) de l'utilisateur, qui a été préenregistrée : il effectue également une étape de vérification pour savoir si la signature courante (25) qu'il a reçue correspond bien aux données biométriques (15) conservées en mémoire après la phase d'acquisition (10).

Une telle phase de vérification (40), nécessite une puissance de calcul limitée et peut parfaitement être mise en oeuvre par le processeur d'un objet électronique de type carte à puce. Un procédé ou un système selon l'invention permet donc de sécuriser totalement l'identification de l'utilisateur.

En effet, le processus d'identification commence nécessairement par l'acquisition de données biométriques (10), image ou son, et sa sauvegarde dans une mémoire inaccessible. Cette étape d'acquisition (10) et de conservation d'une image ou d'un son est totalement sécurisée grâce aux techniques couramment utilisées dans les objets électroniques portatifs de type carte à puce. Lors des échanges entre l'objet portatif et le dispositif d'analyse, un pirate pourra toujours intercepter les données biométriques (15) et/ou la signature courante (25) associée à ces données. En revanche, il ne pourra pas charger ultérieurement dans la mémoire de l'objet électronique portatif les données biométriques (15) qu'il a piraté. Par conséquent, un pirate ne pourra pas non plus utiliser une signature courante (25) qu'il aurait piraté, puisqu'elle ne correspondra pas à aux données biométriques mémorisées (15) dans l'objet électronique portatif au début du processus d'identification.

Dans une variante de mise en oeuvre, le capteur ne fait pas partie du dispositif électronique portatif. Le capteur étant non solidaire du dispositif électronique portatif, les données biométriques (15) acquises doivent être transmises audit dispositif électronique portatif pour qu'il les mémorise, de façon à pouvoir vérifier que la signature courante (25) est bien le résultat de l'analyse desdites données (15).

A cette fin, les moyens d'acquisition du dispositif électronique portatif comprennent des moyens de communication aptes à recevoir des données biométriques (15) issues du capteur non solidaire du dispositif électronique portatif.

L'origine des données reçues par les moyens de communication doit être garantie pour éviter toute fraude. Dans le cas d'un capteur fixe, faisant par exemple partie d'un guichet de banque ou d'un sas de sécurité, une sécurité physique peut suffire pour assurer que les données reçues par le dispositif électronique portatif sont bien celles qui viennent d'être acquises par le capteur. Dans les autres cas, par exemple dans le cas d'un capteur mobile, ou si les échanges s'effectuent via un PC, les moyens d'acquisition de l'objet électronique portatif comprennent des moyens de vérification. Ces moyens de vérification permettent de garanti= la provenance des données reçues par le dispositif portatif en mettant en oeuvre des techniques classiques, par exemple un protocole d'échange sécurisé utilisant des certificats ou des techniques de cryptographie courantes dans le domaine des objets électroniques portatifs de type cartes à puces.

Dans une autre variante de mise en oeuvre de l'invention, que le capteur soit solidaire ou non de l'objet électronique portatif, les données biométriques (15) issues de la phase d'acquisition (10) ne sont pas stockées dans une mémoire pour effectuer la vérification de l'origine de la signature courante obtenue lors de la phase d'analyse (20). Afin d'assurer les deux fonctions permettant de résoudre les problèmes de sécurité soulevés (vérification que les données biométriques reçues ont bien été produites par le capteur lors de la phase d'acquisition (10), et vérification que la signature courante (25) est bien issue de l'analyse (20) de ces données biométriques), une technique de filigrane ou de « tag », appelée également watermarking en anglais, est utilisée.

Cette technique, qui sert fréquemment pour protéger des droits d'auteur, permet d'insérer des informations d'identification au sein de données que l'on veut pouvoir identifier. De préférence, les données sont insérées de façon à être indécelables. Dans le cas présent, les données d'identification doivent être insérées de telle sorte qu'elles ne disparaissent pas lors de la phase d'analyse (20). Le procédé d'insertion va donc dépendre du type des données à analyser (audio ou vidéo), et du traitement que ces données vont subir lors de leur analyse.

Cette adaptation du procédé d'insertion au procédé d'analyse ne pose pas de problème particulier lorsque le capteur et le dispositif d'analyse sont appairés, c'est à dire sont spécifiquement conçus pour fonctionner ensembles. Ce sera en particulier le cas lorsque le capteur et le dispositif d'analyse font tous les deux partie d'un poste fixe, comme un guichet automatique de banque ou un poste de contrôle d'accès. La génération du filigrane mettra en oeuvre des techniques classiques permettant de générer un filigrane différent pour chaque utilisation. Ainsi, lors de deux utilisations successives d'un même système avec le même objet portatif, deux filigranes différents seront superposés à un même jeu de données biométriques (15), image ou son, fourni par le capteur. De cette manière, si un pirate arrive à intercepter les données avec leur filigrane au cours de leur transmission par le capteur vers l'objet portatif, ces données ne pourront pas être réutilisées frauduleusement puisque le filigrane qui leur est associé ne sera plus valable.

L'objet électronique portatif doit naturellement être en mesure de détecter le filigrane et d'en vérifier la validité.

Si les données biométriques (15) qui sont utilisées représentent une empreinte digitale, dont l'analyse comprend une extraction de contours et la détection des singularités comme les points intersections ou les points d'extrémités, le marquage de l'image peut se faire en insérant des singularités factices à des emplacements qui changeront à chaque tentative d'identification.

Les procédés décrits dans les différents modes de mise en oeuvre de l'invention précédemment exposés peuvent être combinés. Ainsi, une technique de filigrane peut être utilisée pour sécuriser le transfert des données biométriques (15) entre le capteur et un objet électronique portatif, ledit objet électronique stockant alors lesdites données dans une mémoire pour pouvoir vérifier qu'elle correspond avec la signature courante (25) obtenue après la phase d'analyse (20). Dans ce cas, l'analyse peut détruire le filigrane sans diminuer la sécurité, et la technique de filigrane peut même être remplacée par une technique de certification cryptographique. De manière générale, toute sécurisation pourra être utilisée, qu'elle soit physique ou logique : il suffit qu'elle assure la fonction de vérification prouvant que l'image reçue par l'objet électronique portatif est bien l'image qui a été générée par le capteur.

Ainsi dans le cas où le capteur n'est pas solidaire de l'objet électronique portatif, on utilisera un dispositif électronique d'acquisition de données biométriques (15) comprenant un capteur comprenant également des moyens de communication pour échanger des données avec un dispositif électronique portatif de type carte à puce, et comprenant des moyens d'authentification aptes à authentifier les données transmises.

Comme exposé précédemment, les moyens d'authentification peuvent être aptes à insérer des données d'identification de type filigrane dans les données transmises ou bien ils peuvent comprendre des moyens de certification et/ou de chiffrement et de déchiffrement des données transmises.

## Revendications

1. Procédé d'identification biométrique comprenant une étape d'acquisition (10) de données biométriques (15), une étape d'analyse (20) de ces données produisant une signature courante (25), une étape de comparaison (30) de ladite signature courante avec une signature de référence (35), **caractérisé en ce que** le procédé comprend également une étape de vérification (40) de l'origine de la signature courante (25), déterminant si cette signature courante (25) provient bien de l'analyse desdites données biométriques (15) obtenues lors de la phase d'acquisition (10) et **en ce que** les étapes de comparaison (30) et de vérification (40) sont effectuées par un dispositif électronique portatif.

2. Procédé d'identification biométrique selon la revendication 1, **caractérisé en ce qu'**il comprend une étape de mémorisation, dans une mémoire du dispositif électronique portatif, des données biométriques obtenues (15) lors de la phase d'acquisition (10).

3. Dispositif électronique portatif de type carte à puce **caractérisé en ce qu'**il comprend :
- des moyens d'acquisition de données biométriques (15),
- des moyens de mémorisation dans lesquels est mémorisée une signature de référence (35),
- des moyens de comparaison comparant une signature courante (25) à la signature de référence (35),
- des moyens de vérification aptes à vérifier que la signature courante (25) provient bien de l'analyse desdites données biométriques (15) acquises par les moyens d'acquisition.

4. Dispositif électronique portatif de type carte à puce selon la revendication 3 **caractérisé en ce** gu'il comprend des moyens de mémorisation pour stocker les données biométriques (15) acquises par les moyens d'acquisition

5. Dispositif électronique portatif de type carte à puce selon la revendication 3 ou 4 **caractérisé en ce qu'**il comprend des moyens d'insertion d'un marquage de type filigrane dans les données biométriques (15) acquises par les moyens d'acquisition, et **en ce que** les moyens de vérification comprennent des moyens de détection du marquage dans la signature courante (25)

## Claims

1. A biometric identification method comprising a step (10) of acquiring biometric data (15), a step (20) of analysing these data producing a current signature (25), a step (30) of comparing said current signature with a reference signature (35), **characterised in that** the method also comprises a step (40) of verifying the origin of the current signature (25), determining whether this current signature (25) really comes from the analysis of said biometric data (15) obtained during the acquisition phase (10), and **in that** the comparison (30) and verification (40) steps are carried out by a portable electronic device.

2. A biometric identification method according to Claim 1, **characterised in that** it comprises a step of storing, in a memory in the portable electronic device, the biometric data (15) obtained during the acquisition phase (10).

3. A portable electronic device of the smart card type, **characterised in that** it comprises:
- means of acquiring biometric data (15);
- storage means in which a reference signature (35) is stored;
- comparison means comparing a current signature (25) with the reference signature (35);
- verification means capable of verifying that the current signature (25) really comes from the analysis of said biometric data (15) acquired by the acquisition means.

4. A portable electronic device of the smart card type according to Claim 3, **characterised in that** it comprises storage means for storing the biometric data (15) acquired by the acquisition means.

5. A portable electronic device of the smart card type according to Claim 3 or 4, **characterised in that** it comprises means of inserting watermark type marking in the biometric data (15) acquired by the acquisition means, and **in that** the verification means comprise means of detecting the marking in the current signature (25).

## Patentansprüche

1. Biometrisches Identifikationsverfahren mit einer Akquisitionsstufe (10) biometrischer Daten (15), einer Analysestufe (20) dieser eine gebräuchliche Unterschrift (25) erstellenden Daten, einer Vergleichsstufe (30) der genannten gebräuchlichen Unterschrift mit einer Referenzunterschrift (35), **dadurch gekennzeichnet, dass** das Verfahren ebenfalls eine Überprüfungsstufe (40) der Herkunft der gebräuchlichen Unterschrift (25) umfasst, die bestimmt, ob diese gebräuchliche Unterschrift (25) effektiv aus der Analyse der genannten, bei der Akquisitionsphase (10) erhaltenen biometrischen Daten (15) stammt und dass die Vergleichs- (30) und Überprüfungsstufen (40) durch eine tragbare elektronische Vorrichtung durchgeführt werden.

2. Biometrisches Identifikationsverfahren gemäß Anspruch 1, **dadurch gekennzeichnet, dass** es eine Speicherstufe in einem Speicher der tragbaren elektronischen Vorrichtung der bei der Akquisitionsphase (10) erhaltenen biometrischen Daten (15) umfasst.

3. Tragbare elektronische Vorrichtung vom Typ Chipkarte, **dadurch gekennzeichnet, dass** sie Folgendes umfasst:
- Akquisitionsmittel biometrischer Daten (15),
- Speichermittel, in denen eine Referenzunterschrift (35) gespeichert ist,
- eine gebräuchliche Unterschrift (25) mit der Referenzunterschrift (35) vergleichende Vergleichsmittel,
- zur Überprüfung, dass die gebräuchliche Unterschrift (25) effektiv aus der Analyse der genannten, durch die Akquisitionsmittel erworbenen biometrischen Daten (15) stammt, geeignete Überprüfungsmittel.

4. Tragbare elektronische Vorrichtung vom Typ Chipkarte gemäß Anspruch 3, **dadurch gekennzeichnet, dass** sie Speichermittel zum Speichern der durch die Akquisitionsmittel erworbenen biometrischen Daten (15) umfasst.

5. Tragbare elektronische Vorrichtung vom Typ Chipkarte gemäß Anspruch 3 oder 4, **dadurch gekennzeichnet, dass** sie Einfügemittel einer Markierung vom Wasserzeichentyp in die durch die Akquisitionsmittel erworbenen biometrischen Daten (15) umfasst und dass die Überprüfungsmittel Feststellungsmittel der Markierung in der gebräuchlichen Unterschrift (25) umfassen.
